(19) Europäisches Patentamt
European Patent Office
Office européen des brevets

(11) EP 0 565 228 B1

(12) **EUROPEAN PATENT SPECIFICATION**

(45) Date of publication and mention of the grant of the patent:
**01.09.1999 Bulletin 1999/35**

(51) Int Cl.⁶: **G11B 7/013**, G11B 7/00

(21) Application number: **93301476.3**

(22) Date of filing: **26.02.1993**

(54) **Optical disk and method of reproducing information therefrom**

Optische Scheibe und Verfahren zur Wiedergabe von Daten davon

Disque optique et méthode pour la reproduction des données de celui-ci

(84) Designated Contracting States:
**DE FR GB**

(30) Priority: **09.04.1992 JP 8868192**

(43) Date of publication of application:
**13.10.1993 Bulletin 1993/41**

(73) Proprietor: **PIONEER ELECTRONIC CORPORATION**
**Meguro-ku, Tokyo (JP)**

(72) Inventor: **Nomoto, Takayuki,**
**c/o Pioneer Tokorozawa Plant**
**Tokorozawa-City, Saitama (JP)**

(74) Representative: **Tomlinson, Kerry John et al**
**Frank B. Dehn & Co.,**
**European Patent Attorneys,**
**179 Queen Victoria Street**
**London EC4V 4EL (GB)**

(56) References cited:

**EP-A- 0 376 626**
**EP-A- 0 516 906**
**FR-A- 2 396 378**
**US-A- 4 963 464**

- **PATENT ABSTRACTS OF JAPAN vol. 9, no. 76 (P-346)(1799) 5 May 1985 & JP-A-59 207 433 ( SONY K K ) 24 November 1984**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 565 228 B1

## Description

The present invention relates to an optical-disk information reproducing method of reproducing recorded information from an optical disk.

Conventional optical disks, such as compact disks (CDs) or video disks (VDs), have pit information recorded in the form of the presence or absence of pits with a given depth and the lengths of the pits. The pit information is reproduced with a read beam of a single wavelength.

The amount of information recordable on such an optical disk is restricted by the sizes of the pits and the read beam spot (the wavelength λ and the numerical aperture NA of the objective lens), so that the recording density has reached the maximum level at present.

It is therefore difficult to further improve the recording density of information on an optical disk.

US-A-4963464 describes an optical medium having tracks of pits with the pits in respective adjacent tracks having different depths, and a method and apparatus for reproducing information therefrom.

EP-A-0516906 (which was published after the priority date of the present application and is therefore prior art under Art. 54(3) EPC only) describes an optical disk and pick-up apparatus therefor having a two-step pit structure in which first and second pits are arranged in superposition in the same track direction.

Accordingly, it is an object of the present invention to provide an optical-disk information reproducing method for reproducing pit information from an optical disk designed to improve the information recording density.

To achieve this object, according to the present invention there is provided a method of reproducing information from an optical disk by an information reproducing apparatus, said optical disk having unit areas continuously provided in a circumferential direction of said disk, each bit of said information being recorded in the form of a pit, wherein each of said unit areas is divided into a plurality of sub-units, said optical disk comprises a plurality of pits in each of said unit areas, arranged in an arbitrary half of said sub-units of said unit area, each of said plurality of pits having a depth of at least one of n depths, n being an integer equal to or greater than two, wherein each bit of said information recorded in the form of a pit has a depth which corresponds respectively to one of said n depths, each bit of said information being recorded by setting a depth of a corresponding pit, said information reproducing method comprising the steps of: irradiating a read beam having frequency components of n wavelengths corresponding to four times each of said n depths to a row of said unit areas; and acquiring pit information based on the intensity distribution in a plane perpendicular to an optical axis of a reflected beam from said row of unit areas.

According to a second aspect of the present invention, there is provided a system for reproducing information, comprising an optical disk and an information reproducing apparatus, said optical disk having unit areas continuously provided in a circumferential direction of said disk, each bit of said information being recorded in the form of a pit, wherein each of said unit areas is divided into a plurality of sub-units, said optical disk comprises a plurality of pits in each of said unit areas arranged in an arbitrary half of said sub-units of said unit area, each of said plurality of pits having a depth of at least one of n depths, n being an integer equal to or greater than two, wherein each bit of said information recorded in the form of a pit has a depth which corresponds respectively to one of said n depths, each bit of said information being recorded by setting a depth of a corresponding pit, said information reproducing apparatus comprising:

means for irradiating a reading light beam having frequency components of n wavelengths corresponding to four times of each of said n depths to a row of said unit areas; and means for acquiring pit information based on the intensity distribution in a plane perpendicular to an optical axis of a reflected light beam of said reading light beam from said row of unit areas, said means for acquiring comprising a quadrant-type photo detector having four divided sections and producing four output signals when receiving said reflected light beam, four adders respectively adding two of said four output signals of said quadrant-type photo detector and respectively producing a summing signal, and a logic circuit producing four logical signals each corresponding to said summing signal from each of said four adders, said logical signal assuming a first logical level when the level of said corresponding summing signal is higher than the levels of the other summing signals.

An optical-disk information reproducing method embodying the present invention irradiates a read beam including frequency components of n wavelengths respectively equal to four times n types of depths of pits on an optical disk and acquires pit information based on a reflected beam from each of unit areas.

According to the information reproducing method of this invention, pit information is acquired by the level of a difference signal representing the difference between received light signals from a plurality of receiving surfaces perpendicular to the optical axis of the reflected beam of each unit area on an optical disk. In addition, the information about the presence of divided pits for each divided area or arrangement information is acquired by comparing the levels of sum signals of received light signals from a plurality of receiving surfaces perpendicular to the optical axis of the reflected beam.

A number of embodiments of the present invention will now be described by way of example only and with reference to the accompanying drawings, in which:

Fig. 1 is an exemplary diagram illustrating an arrangement of pits on the recording surface of an optical disk;

Figs. 2A and 2B respectively present a cross section showing the optical system of a pickup which picks up information from the optical disk in Fig. 1 and a circuit diagram showing the electric circuit of this pickup;

Fig. 3 presents a characteristic diagram showing the relationship between the wavelength of a read beam to be irradiated on pits having a given depth and the level of a difference signal;

Fig. 4 is an exemplary diagram illustrating the arrangement of pits on the recording surface of an optical disk according to a first embodiment of the present invention;

Figs. 5A and 5B respectively present a cross section showing the optical system of a pickup which picks up information from the optical disk in Fig. 4 and a circuit diagram showing the electric circuit of this pickup;

Figs. 6(a) to 6(d) are exemplary diagrams illustrating the arrangements of pits on the recording surface of an optical disk according to a second embodiment of the present invention;

Figs. 7(a) to 7(d) are explanatory diagrams showing the -intensity distributions of a reflected beam on the light-receiving surfaces of a photodetector when a read beam is irradiated on the pits arranged as shown in (a) to (d) in Fig. 6;

Fig. 8 is a circuit diagram showing a circuit to detect the pit arrangement;

Fig. 9 presents a characteristic diagram showing the relationship between the number of pits per unit and the number of wavelengths according to the second embodiment; and

Fig. 10 presents a characteristic diagram showing the relationship between the unit area density and the longest wavelength in use.

Fig. 1 is an exemplary diagram illustrating an arrangement of pits on the recording surface of an optical disk .

In Fig. 1, a square unit area U is set in the circumferential direction of an optical disk or in the information recording direction R. The unit area U is divided into a first subunit $U_1$ and a second subunit $U_2$ with a center line L. The length $U_P$ of each side of the unit area U represents the pitch between rows of pits or the pitch between tracks.

Pits P are provided in the first subunit $U_1$. The pits P have one of n depths (n: an integer equal to or greater than 2).

A read beam to be irradiated on an optical disk according to this invention forms a beam spot $S_S$ of the shortest wavelength $\lambda_S$ and a beam spot $S_L$ of the longest wavelength $\lambda_L$.

The wavelengths of a plurality of components included in the read beam are respectively four times the n depths of the pits P. That is, with the wavelength of $\lambda_n$ and the pits P having a depth of $\Delta_n$, $\lambda_n = 4 \cdot \Delta_n$.

The length $U_P$ of each side of the unit area U should be determined to be equal to or greater than $\lambda_L/(2 \times NA)$ where NA is the numerical aperture of the objective lens and the longest wavelength $\lambda_L$ of beam components included in the read beam.

When the length $U_P$ is set close to the cutoff frequency of the so-called OTF (Optical Transfer Function) of the pickup optical system, however, the level of the received light signal becomes smaller. In consideration of the wavelength characteristic of the output of the photodetector and a variation in the level of a beam component, it is preferable to set $U_P$ to be about $\lambda_L/(2^{1/2} \times NA)$.

Fig. 2 illustrates an apparatus for reading information from a disk having such pits P.

In Fig. 2A, a laser beam source 10 emits a read beam 12 toward a polarization surface 13a of a polarization prism 13. The read beam 12 includes a plurality of frequency components $f_n$ having wavelengths $\lambda_n$ equal to four times the possible depths $\Delta_n$ of the pits P on an optical disk 11 of the present invention. In this embodiment, n = 3. The read beam 12 passing the polarization surface 13a is irradiated on the recording surface of the optical disk 11 and is reflected therefrom. The reflected beam comes incident to the polarization surface 13a. As the polarization face of the reflected beam is changed due to the reflection, the reflected beam is reflected at the polarization surface 13a to be incident to a half mirror $HM_1$. This beam is separated into two reflected beam components. One of the reflected beam components enters a $\lambda_1$-pass filter $FL_1$ which passes only a component of a wavelength $\lambda_1$, and the other component enters a half mirror $HM_2$. The $\lambda_1$ component that has passed the filter $FL_1$ enters a bisected photodetector $D_{11}$.

The beam incident to the half mirror $HM_2$ is separated into two reflected beam components. One of the reflected beam components enters a $\lambda_2$-pass filter $FL_2$ which passes only a component of a wavelength $\lambda_2$, and the other component enters a $\lambda_3$-pass filter $FL_3$ which passes only a $\lambda_3$ component. The $\lambda_2$ component that has passed the filter $FL_2$ enters a bisected photodetector $D_{12}$, while the $\lambda_3$ component that has passed the filter $FL_3$ enters a bisected photodetector $D_{13}$.

As shown in Fig. 2B, each of the bisected photodetectors $D_{11}$, $D_{12}$ and $D_{13}$ has light-receiving surfaces $d_1$ and $d_2$, and the light outputs of each photodetector are supplied to an associated differential amplifier $DF_1$, $DF_2$ or $DF_3$. The differential outputs of the individual differential amplifiers $DF_1$, $DF_2$ and $DF_3$ are supplied to one input terminals of NAND gates $G_1$, $G_2$ and $G_3$, respectively. The outputs of the bisected photodetector $D_{13}$ also become input signals to a summing amplifier ADD whose output is one input signal of a comparator CP. As long as the input signal is lower than a reference

voltage $V_r$, the comparator CP supplies a logic "0" signal to the other input terminals of the NAND gates $G_1$, $G_2$ and $G_3$. Upon reception of a low-level signal or a logic "0" signal at one input terminal from the differential amplifier $DF_1$, $DF_2$ or $DF_3$ while receiving the logic "0" signal at the other input terminal from the comparator CP, the NAND gate $G_1$, $G_2$ or $G_3$ outputs a logic "1" signal to an associated output terminal $R_1$, $R_2$ or $R_3$.

Fig. 3 presents a graph showing the relationship between the wavelength $\lambda_n$ of the read beam to be irradiated on pits having a depth $\Delta_n$ and the levels of the output signals of the differential amplifiers $DF_1$, $DF_2$ and $DF_3$.

In Fig. 3, a solid line $C_{11}$ shows a change in the level of the reflected beam when the read beam is irradiated on the pits P with a depth of 0.160 μm while the wavelength of the read beam is changed from 0.60 μm to 0.80 μm. A broken line $C_{12}$ shows a change in the level of the reflected beam when the read beam is irradiated on the pits P with a depth of 0.175 μm while the wavelength of the read beam is changed from 0.60 μm to 0.80 μm. An alternate short and long dash line (phantom line) $C_{13}$ shows a change in the level of the reflected beam when the read beam is irradiated on the pits P with a depth of 0.190 μm while the wavelength of the read beam is changed from 0.60 μm to 0.80 μm.

It is to be noted that 0 dB on the vertical scale corresponds to 30% of the incident amount of the read beam.

It is apparent from Fig. 3 that the output signal level of the differential amplifier $DF_1$ corresponding to the wavelength $\lambda_1$ of 0.64 μm becomes zero or very small as indicated by the characteristic curve $C_{11}$ for the pits P with a depth of 0.160 μm, the output signal level of the differential amplifier $DF_2$ corresponding to the wavelength $\lambda_2$ of 0.70 μm becomes zero or very small as indicated by the characteristic curve $C_{12}$ for the pits P with a depth of 0.175 μm, and the output signal level of the differential amplifier $DF_3$ corresponding to the wavelength $\lambda_3$ of 0.76 μm becomes zero or very small as indicated by the characteristic curve $C_{13}$ for the pits P with a depth of 0.190 μm.

But, the output signal level of the amplifier $DF_1$ becomes large for the pits P with a depth of 0.175 μm or 0.190 μm, the output signal level of the amplifier $DF_2$ becomes large for the pits P with a depth of 0.190 μm or 0.180 μm, and the output signal level of the amplifier $DF_3$ becomes large for the pits P with a depth of 0.160 μm or 0.175 μm.

Therefore, by irradiating one read beam including a plurality of wavelengths $\lambda_1$, $\lambda_2$ and $\lambda_3$ onto the pits P and separating the reflected beam into components for the individual wavelengths $\lambda_1$, $\lambda_2$ and $\lambda_3$ through the respective filters, the difference signal representing the difference between the outputs of the first and second bisected photodetector portions $d_{11}$ and $d_{12}$ is acquired for each wavelength component. It is understood that when the difference signal has a predetermined value or a logic "1", pits P with a depth of $\lambda_n/4$ corresponding to the wavelength $\lambda_n$ of the read beam are not in the unit area U, and when the difference signal has a value of zero or a very small value, i.e., a logic "0", pits P with a depth of $\lambda_n/4$ corresponding to the wavelength $\lambda_n$ of the read beam are in the unit area U.

As apparent from the above, one information can be associated with one depth of the pits P, so that with n types of depths equal to or greater than 2 being set for the pits P, when the pits P are provided in one unit area U, this unit area can have two or more pieces of information. This can improve the information recording density.

Fig. 4 presents an exemplary diagram illustrating the arrangement of pits on the recording surface of an optical disk according to a first embodiment of the present invention. The same reference numerals as used in Fig. 1 are given to the corresponding or identical portions in Fig. 4 to avoid their redundant description.

For the optical disk shown in Fig. 4, the unit area U is divided in the circumferential direction and radial direction of the disk to be first to fourth subunits $U_{11}$, $U_{12}$, $U_{13}$ and $U_{14}$. First divided pits $P_1$ are located in the first subunit $U_{11}$, and second divided pits $P_2$ in the second subunit $U_{12}$. The first divided pits $P_1$ and second divided pits $P_2$ have any one of n depths (n: an integer equal to or greater than 2).

Fig. 5A shows the optical system of a pickup which detects information from the optical disk shown in Fig. 4, and Fig. 5B shows the electric circuit of this pickup.

The optical system in Fig. 5A has the same structure as the one shown in Fig. 2A except that it uses quadrant photodetectors $D_{21}$, $D_{22}$ and $D_{23}$.

In the electric circuit shown in Fig. 5B, the received light signals from the light-receiving surfaces $d_1$, $d_2$, $d_3$ and $d_4$ of each quadrant photodetector $D_{2n}$ are operated in differential amplifiers $df_1$ and $df_2$ to acquire a $(d_1\text{-}d_3)$ signal and a $(d_2\text{-}d_4)$ signal. The $(d_1\text{-}d_3)$ signal is supplied to one input terminal of a NAND gate $g_1$, and the $(d_2\text{-}d_4)$ signal is supplied to one input terminal of a NAND gate $g_2$. Summing amplifiers $add_1$ and $add_2$ respectively produce a $(d_1+d_3)$ signal and a $(d_2+d_4)$ signal and supply them to one input terminals of comparators $CP_1$ and $CP_2$. When the $(d_1+d_3)$ signal and $(d_2+d_4)$ signal fall below a reference voltage $V_r$, the comparators $CP_1$ and $CP_2$ output logic "0" signals. The outputs signals of the comparators $CP_1$ and $CP_2$ are respectively supplied to the other input terminals of the NAND gates $g_1$ and $g_2$. The NAND gate $g_1$ outputs a logic "1" on its output terminal $r_{11}$ when the $(d_1\text{-}d_3)$ signal becomes a low level (logic "0") while the logic "0" signal is received from the comparator $CP_1$. The NAND gate $g_2$ outputs a logic "1" on its output terminal $r_{21}$ when the $(d_2\text{-}d_4)$ signal becomes a low level (logic "0") while the logic "0" signal is received from the comparator $CP_2$.

The quadrant photodetectors $D_{22}$ and $D_{23}$ have the same circuit structure as the one shown in Fig.

5B and have outputs ($r_{12}$, $r_{22}$) and ($r_{13}$, $r_{23}$) though not shown. Therefore, a read beam with wavelengths of $\lambda_1$, $\lambda_2$ and $\lambda_3$ can provide a total of six pieces of information ($r_{11}$, $r_{12}$), ($r_{12}$, $r_{22}$) and ($r_{13}$, $r_{23}$) in a single unit area U.

Supposing that the pits $P_1$ and $P_2$ are respectively given two depths $\Delta_1$ and $\Delta_2$ corresponding to two wavelengths $\lambda_1$, and $\lambda_2$ for each unit area U on the optical disk shown in Fig. 4, at least four pieces of information can be recorded in each unit area by the combinations of the positional information of the pits $P_1$ and $P_2$ to the subunits $U_{11}$ and $U_{12}$. It is apparent that the information recording density can be improved.

In Fig. 6, (a) to (d) are exemplary diagrams illustrating the arrangement of pits on the recording surface of an optical disk according to a second embodiment of the present invention. The same reference numerals as used in Figs. 1 and 4 are given to the corresponding or identical portions in Fig. 6 to avoid their redundant description.

Fig. 6(a) illustrates the case where the first divided pits $P_1$ are provided in the first subunit $U_{11}$ and the second divided pits $P_2$ in the second subunit $U_{12}$. Fig. 6(b) illustrates the case where the first divided pits $P_1$ are provided in the second subunit $U_{12}$ and the second divided pits $P_2$ in the third subunit $U_{13}$. Fig. 6(c) illustrates the case where the first divided pits $P_1$ are provided in the third subunit $U_{13}$ and the second divided pits $P_2$ in the fourth subunit $U_{14}$. Fig. 6(d) illustrates the case where the first divided pits $P_1$ are provided in the fourth subunit $U_{14}$, and the second divided pits $P_2$ in the first subunit $U_{11}$.

Figs. 7(a) to 7(d) are explanatory diagrams showing the intensity distributions of a reflected beam on the light-receiving surfaces of a quadrant photodetector when a read beam is irradiated on the pits arranged as shown in (a) to (d) in Fig. 6.

Fig. 8 illustrates a detector that detects the pit arrangement.

In Fig. 8, the detector is connected to one ($D_{21}$) of the quadrant photodetectors $D_{21}$, $D_{22}$ and $D_{23}$ provided in the optical system of the pickup.

Summing amplifiers $add_1$, $add_2$, $add_3$ and $add_4$ output signals $S_1 = (d_1+d_2)$, $S_2 = (d_2+d_3)$, $S_3 = (d_3+d_4)$ and $S_4 = (d_1+d_4)$, respectively. A comparator $CP_3$ produces logic signals $S_a$, $S_b$, $S_c$ and $S_d$ corresponding to the four input signals $S_1$, $S_2$, $S_3$ and $S_4$. Each of the logic signals $S_a$, $S_b$, $S_c$ and $S_d$ will take a logical value of "1" when its one input signal is greater than the other input signal.

When the first divided pits $P_1$ are provided in the first subunit $U_{11}$ and the second divided pits $P_2$ in the second subunit $U_{12}$ as shown in (a) in Fig. 6, it is apparent from (a) in Fig. 7 that as the sum signal $S_1$ is the largest output among the sum signals $S_1$ to $S_4$, Sa = 1 through the comparison of the sum signals $S_1$ to $S_4$ in the comparator $CP_3$. Sa = 1 is the information representing that the first and second divided pits $P_1$ and $P_2$ are arranged as shown in (a) in Fig. 6.

Likewise, information representing the arrangement of the first and second divided pits $P_1$ and $P_2$ as shown in (b) to (d) in Fig. 6 can be obtained based on the result of the comparison done in the comparator $CP_3$.

According to the second embodiment of the present invention wherein the arrangement information of the first and second divided pits $P_1$ and $P_2$ are added to the first embodiment, one unit area U can have four times the amount of information available in the first embodiment, thus further improving the information recording density.

That is, pieces of information which correspond in number to the combinations of ($S_a$, $S_b$, $S_c$, $S_d$) and ($r_{1n}$, $r_{2n}$) can be recorded in a single unit area U.

Fig. 9 presents a characteristic diagram showing the relation between the number of pits per unit area and the number of wavelengths (depths of pits) in the second embodiment.

Fig. 10 presents a characteristic diagram showing the unit area density and the longest wavelength in use.

In Fig. 10, a solid line $C_{21}$ indicates the unit area density when the numerical aperture NA is 0.45 and the longest wavelength $\lambda_L$ ranges from 0.60 μm to 0.80 μm. A broken line $C_{22}$ indicates the unit area density when the numerical aperture NA is 0.50 and the longest wavelength $\lambda_L$ ranges from 0.60 μm to 0.80 μm. An alternate long and short dash line $C_{23}$ indicates the unit area density when the numerical aperture NA is 0.55 and the longest wavelength $\lambda_L$ ranges from 0.60 μm to 0.80 μm. An alternate long and two short dashes line $C_{24}$ indicates the unit area density when the numerical aperture NA is 0.60 and the longest wavelength $\lambda_L$ ranges from 0.60 μm to 0.80 μm.

Next, the recording density will be described below.

Given that the number of wavelengths (depths of pits) is n in the second embodiment shown in Fig. 6, the number of combinations of the depths of the first and second divided pits $P_1$ and $P_2$ is expressed as follows.
number of combinations = (number of wavelengths)$^2$ × 4

The number of bits in those combinations is expressed as follows.

$$\text{number of bits} = \log_2 (\text{number of combinations})$$

$$= \log_2 [(\text{number of wavelengths})^2 \times 4]$$

Thus, the relationship between the number of bits per unit U and the number of wavelengths in the second embodiment becomes as shown in the characteristic diagram of Fig. 9.

The size of the unit U is determined by the longest wavelength $\lambda_L$ and is given by the following equation.

$$\text{unit size} = [\lambda_L/(2^{1/2} \times NA)]^2$$

Thus, the relationship between the longest wavelength $\chi_L$ and the unit density becomes as shown in Fig. 10.

From the above, the recording density in the second embodiment is given as follows.

$$\text{recording density} = \{\log_2 [(\text{number of wavelengths})^2 \times 4]\} / [\lambda_L/(2^{1/2} \times NA)]^2$$

When the longest wavelength $\lambda_L$ is 0.785 μm which is the wavelength of the existing pickup, the number of wavelengths is 2 and the numerical aperture NA is 0.5 which is the same as the existing one, the recording density becomes $0.8 \times 4 = 3.2$ (pits/μm$^2$), 2.4 times that of the existing CD, from the above equation.

A sync signal may be recorded on the optical disk by inserting a sync pit within a group of consecutive pits and the sync signal can be utilized for detecting a timing when the reading spot coincides with the unit area. The information signal based on the reflected beam may be evaluated at each of the particular sync timings.

The optical disk to be read in the present invention has pit information recorded by setting multi-leveled depths for the pits provided in individual unit areas continuously segmented in the information recording direction, so that the information recording density can be improved.

In the optical-disk information reproducing method of the present invention, a beam having a plurality of wavelengths corresponding to four times the multi-leveled depths of pits is irradiated as a read beam to each unit area on the optical disk, pit information is acquired based on the reflected beam from the unit area, and composite pit information recorded on the optical disk is reproduced based on the combination of the arrangement information of the pits in the unit area and the depth information of the pits.

## Claims

1. A method of reproducing information from an optical disk by an information reproducing apparatus, said optical disk having unit areas (U) continuously provided in a circumferential direction of said disk, each bit of said information being recorded in the form of a pit (P), wherein each of said unit areas (U) is divided into a plurality of sub-units ($U_{11}$, $U_{12}$, $U_{13}$, $U_{14}$), said optical disk comprises a plurality of pits ($P_1$, $P_2$) in each of said unit areas (U) arranged in an arbitrary half of said sub-units ($U_{11}$, $U_{12}$, $U_{13}$, $U_{14}$) of said unit area (U), each of said plurality of pits ($P_1$, $P_2$) having a depth of at least one of n depths, n being an integer equal to or greater than two, wherein each bit of said information recorded in the form of a pit (P) has a depth which corresponds respectively to one of said n depths, each bit of said information being recorded by setting a depth of a corresponding pit (P), said information reproducing method comprising the steps of:

   irradiating a read beam having frequency components of n wavelengths corresponding to four times each of said n depths to a row of said unit areas; and

   acquiring pit information based on the intensity distribution in a plane perpendicular to an optical axis of a reflected beam from said row of unit areas.

2. A method of reproducing information from an optical disk as recited in Claim 1, wherein each of said unit areas (U) is divided into at least two sub-areas arranged in a radial direction of said disk, and each of said unit areas (U) is further divided into two in a circumferential direction of said disk to provide four sub-units ($U_{11}$, $U_{12}$, $U_{13}$, $U_{14}$), and said pit is divided into two divided pits ($P_1$, $P_2$), said divided pits ($P_1$, $P_2$) being arranged in any two of said four sub-unit ($U_{11}$, $U_{12}$, $U_{13}$, $U_{14}$), and wherein said step of acquiring pit information comprises the steps of:

   acquiring distribution information of said two divided pits ($P_1$, $P_2$) in said four sub-units ($U_{11}$, $U_{12}$, $U_{13}$, $U_{14}$) and divided-pit information of said two divided pits ($P_1$, $P_2$) based on an intensity distribution in a plane perpendicular to an optical axis of a reflected beam from said row of unit areas; and

   acquiring composite pit information from a combination of said distribution information of said two divided pits and said divided-pit information for every said two divided pits.

3. A system for reproducing information comprising an optical disk and an information reproducing apparatus said optical disk having unit areas (U) continuously provided in a circumferential direction of said disk, each bit of said information being recorded in the form of a pit (P), wherein each of said unit areas (U) is divided into a plurality of sub-units ($U_{11}$, $U_{12}$, $U_{13}$, $U_{14}$), said optical disk comprises a plurality of pits ($P_1$, $P_2$) in each of said unit areas (U) arranged in an arbitrary half of said sub-units ($U_{11}$, $U_{12}$, $U_{13}$, $U_{14}$) of said unit area (U), each of said plurality of pits ($P_1$, $P_2$) having a depth of at least one of n depths, n being an integer equal to or greater than two, wherein each bit of said information recorded in the form of a pit (P) has a depth which corresponds respectively to one of said n depths, each bit of said information being recorded by setting a depth of a corresponding pit (P), said information reproducing apparatus comprising:

means (10) for irradiating a reading light beam (12) having frequency components of n wavelengths corresponding to four times each of said n depths to a row of said unit areas; and means for acquiring pit information based on the intensity distribution in a plane perpendicular to an optical axis of a reflected light beam of said reading light beam from said row of unit areas, said means for acquiring comprising a quadrant-type photo detector ($D_{21}$) having four divided sections ($d_1$, $d_2$, $d_3$, $d_4$) and producing four output signals when receiving said reflected light beam, four adders ($add_1$, $add_2$, $add_3$, $add_4$) respectively adding two of said four output signals of said quadrant-type photo detector and respectively producing a summing signal ($S_1$, $S_2$, $S_3$, $S_4$), and a logic circuit ($CP_3$) producing four logical signals ($S_a$, $S_b$, $S_c$, $S_d$) each corresponding to said summing signal from each of said four adders, said logical signal assuming a first logical level when the level of said corresponding summing signal is higher than the levels of the other summing signals.

**Patentansprüche**

1. Verfahren zur Wiedergabe von Daten von einer optischen Scheibe mittels eines Datenwiedergabegeräts, wobei die optische Scheibe Einheitsflächen (U) aufweist, welche in Umfangsrichtung der Scheibe zusammenhängend angebracht sind, wobei ein jedes Bit der Daten in Form einer Vertiefung (P) aufgezeichnet ist, wobei eine jede der Einheitsflächen (U) in eine Vielzahl von Untereinheiten ($U_{11}$, $U_{12}$, $U_{13}$, $U_{14}$), unterteilt ist, wobei die optische Scheibe eine Vielzahl von Vertiefungen ($P_1$, $P_2$) in einer jeden Einheitsfläche (U) umfaßt, welche in einer willkürlich gewählten Hälfte der Untereinheiten ($U_{11}$, $U_{12}$, $U_{13}$, $U_{14}$) der Einheitsfläche (U) angeordnet sind, wobei eine jede der Vielzahl von Vertiefungen ($P_1$, $P_2$) einer Tiefe von zumindest einem von n Tiefenwerten entspricht, wobei n eine ganze Zahl gleich oder größer 2 ist, wobei ein jedes Bit der Daten, welches in Form einer Vertiefung (P) aufgezeichnet ist, eine Tiefe aufweist, die einem n-fachen eines Tiefenwerts entspricht, wobei ein jedes Bit der Daten durch Einstellen der Tiefe einer entsprechenden Vertiefung (P) aufgezeichnet ist, wobei das Verfahren zur Wiedergabe der Daten die folgenden Schritte umfaßt:

Einstrahlen eines Lesestrahls mit Frequenzkomponenten von n Wellenlängen, welche dem Vierfachen eines jeden der n Tiefenwerte entsprechen, auf eine Reihe der Einheitsflächen; und

Ermitteln von vertiefungsspezifischen Informationen basierend auf der Intensitätsverteilung in einer Ebene senkrecht zu einer optischen Achse eines von der Reihe von Einheitsflächen reflektierten Strahls.

2. Verfahren zur Wiedergabe von Daten von einer optischen Scheibe gemäß Anspruch 1, wobei eine jede der Einheitsflächen (U) in zumindest zwei Unterflächen unterteilt ist, welche in radialer Richtung der Scheibe angeordnet sind, und eine jede der Einheitsflächen (U) weiterhin in einer Umfangsrichtung der Scheibe zweigeteilt ist, um vier Teileinheiten ($U_{11}$, $U_{12}$, $U_{13}$, $U_{14}$) bereitzustellen, und die Vertiefung in zwei unterteilte Vertiefungen ($P_1$, $P_2$) unterteilt ist, und die unterteilten Vertiefungen ($P_1$, $P_2$) in je zwei der vier Untereinheiten ($U_{11}$, $U_{12}$, $U_{13}$, $U_{14}$) angeordnet sind, und wobei der Schritt des Ermittelns vertiefungsspezifischer Daten die folgenden Schritte umfaßt:

Ermitteln von Verteilungsinformation der zwei unterteilten Vertiefungen ($P_1$, $P_2$) in den vier Untereinheiten ($U_{11}$, $U_{12}$, $U_{13}$, $U_{14}$) und von für die beiden unterteilten Vertiefungen ($P_1$, $P_2$) spezifischer Information basierend auf der Intensitätsverteilung in einer Ebene senkrecht zu einer optischen Achse eines von dieser Reihe von Einheitsflächen reflektierten Strahls; und

Ermitteln von zusammengesetzter vertiefungsspezifischer Information aus einer Kombination der Verteilungsinformation der beiden unterteilten Vertiefungen und der für die unterteilten Vertiefungen spezifischen Information für jeweils zwei unterteilte Vertiefungen.

3. System zur Wiedergabe von Daten, welches eine optische Scheibe und ein Datenwiedergabegerät umfaßt, wobei die optische Scheibe Einheitsflächen (U) aufweist, welche in Umfangsrichtung der Scheibe zusammenhängend angebracht sind, wobei ein jedes Bit der Daten in Form einer Vertiefung (P) aufgezeichnet ist, wobei eine jede der Einheitsflächen (U) in eine Vielzahl von Untereinheiten ($U_{11}$, $U_{12}$, $U_{13}$, $U_{14}$) unterteilt ist, wobei die optische Scheibe eine Vielzahl von Vertiefungen ($P_1$, $P_2$) in einer jeden der Einheitsflächen (U) umfaßt, die in einer willkürlich gewählten Hälfte der Untereinheiten ($U_{11}$, $U_{12}$, $U_{13}$, $U_{14}$) der Einheitsfläche (U) angeordnet sind, wobei eine jede der Vielzahl von Vertiefungen ($P_1$, $P_2$) eine Tiefe aufweist, die einem n-fachen eines Tiefenwerts entspricht, wobei n eine ganze Zahl gleich oder größer als 2 ist, aufgezeichnet ist, wobei ein jedes Bit der Daten durch Einstellen der Tiefe einer zugeordneten Vertiefung (P) aufgezeichnet ist, wobei das Datenwiedergabegerät umfaßt:

Mittel (10) zuin Einstrahen eines Leselichtstrahls (12), welcher Frequenzkomponenten von n Wellenlängen umfaßt, die jeweils dem Vierfachen eines der n Tiefenwerte entsprechen, auf eine Reihe der Einheitsflächen; und

Mittel zum Ermitteln vertiefungsspezifischer Daten, basierend auf der Intensitätsverteilung in einer Ebene senkrecht zu einer optischen Achse eines von dieser Reihe von Einheitsflächen vom Leselichtstrahl reflektierten Lichtstrahls, wobei die Mittel zum Ermitteln von Daten einen Photodetektor ($D_{21}$) vom Quadrantentyp umfassen, der vier unterteilte Bereiche ($d_1$, $d_2$, $d_3$, $d_4$) umfaßt, und der vier Ausgabesignalen erzeugt, wenn der reflektierte Lichtstrahl empfangen wird, sowie vier Addierer ($add_1$, $add_2$, $add_3$, $add_4$), welche jeweils zwei der vier Ausgabesignale des Photodetektors vom Quadrantentyp addieren und jeweils ein Summensignal ($S_1$, $S_2$, $S_3$, $S_4$) erzeugen, sowie eine logische Schaltung ($CP_3$) zum Erzeugen von vier logischen Signalen ($S_a$, $S_b$, $S_c$, $S_d$), welche jeweils einem Summensignal eines der vier Addierer entsprechen, wobei das logische Signal einen ersten logischen Pegelwert einnimmt, wenn der Pegelwert des entsprechenden Summensignals höher ist als die Pegelwerte der anderen Summensignale.

**Revendications**

1. Procédé de reproduction d'informations à partir d'un disque optique par un dispositif de reproduction d'informations, ledit disque optique ayant des zones élémentaires (U) réalisées d'une manière continue dans une direction circonférentielle dudit disque, chaque bit desdites informations étant enregistré sous la forme d'une microcuvette (P), chacune desdites zones élémentaires (U) étant divisée en une pluralité d'éléments secondaires ($U_{11}$, $U_{12}$, $U_{13}$, $U_{14}$), ledit disque optique comportant dans chacune desdites zones élémentaires (U) une pluralité de microcuvettes ($P_1$, $P_2$) disposées dans une moitié arbitraire desdits éléments secondaires ($U_{11}$, $U_{12}$, $U_{13}$, $U_{14}$) de ladite zone élémentaire (U), chaque microcuvette de ladite pluralité de microcuvettes ($P_1$, P2) ayant une profondeur au moins égale à l'une de n profondeurs, n étant un entier égal ou supérieur à deux, chaque bit desdites informations enregistrées sous la forme d'une microcuvette (P) ayant une profondeur qui correspond respectivement à une desdites n profondeurs, chaque bit desdites informations étant enregistré en établissant une profondeur d'une microcuvette correspondante (P), ledit procédé de reproduction d'informations comprenant les étapes consistant à :

émettre sur une rangée desdites zones élémentaires un faisceau de lecture ayant des composantes de fréquence à n longueurs d'onde correspondant à quatre fois chacune desdites n profondeurs ; et
acquérir des informations de microcuvettes sur la base de la répartition d'intensité dans un plan perpendiculaire à un axe optique d'un faisceau réfléchi depuis ladite rangée de zones élémentaires.

2. Procédé de reproduction d'informations à partir d'un disque optique selon la revendication 1, dans lequel chacune desdites zones élémentaires (U) est divisée en au moins deux zones secondaires disposées dans une direction radiale dudit disque, et chacune desdites zones élémentaires (U) est en outre divisée en deux dans une direction circonférentielle dudit disque pour réaliser quatre éléments secondaires ($U_{11}$, $U_{12}$, $U_{13}$, $U_{14}$), et ladite microcuvette est divisée en deux microcuvettes divisées ($P_1$, $P_2$), lesdites microcuvettes divisées ($P_1$, $P_2$) étant disposées dans deux quelconques desdits quatre éléments secondaires ($U_{11}$, $U_{12}$, $U_{13}$, $U_{14}$), et dans lequel ladite étape d'acquisition d'informations de microcuvettes comprend les étapes consistant à

acquérir des informations de répartition desdites deux microcuvettes divisées ($P_1$, $P_2$) dans lesdits quatre éléments secondaires ($U_{11}$, $U_{12}$, $U_{13}$, $U_{14}$) et des informations de microcuvettes divisées desdites deux microcuvettes divisées ($P_1$, $P_2$) sur la base d'une répartition d'intensité dans un plan perpendiculaire à un axe optique d'un faisceau réfléchi depuis ladite rangée de zones élémentaires ; et
acquérir des informations composites de microcuvettes à partir d'une combinaison desdites informations de répartition desdites deux microcuvettes divisées et desdites informations de microcuvettes divisées, pour chaque paire desdites microcuvettes divisées.

3. Système pour reproduire des informations, comprenant un disque optique et un dispositif de reproduction d'informations, ledit disque optique ayant des zones élémentaires (U) réalisées de façon continue dans une direction circonférentielle dudit disque, chaque bit desdites informations étant enregistré sous la forme d'une microcuvette (P), dans lequel chacune desdites zones élémentaires (U) est divisée en une pluralité d'éléments secondaires ($U_{11}$,

$U_{12}$, $U_{13}$, $U_{14}$), ledit disque optique comprend dans chacune desdites zones élémentaires (U) une pluralité de microcuvettes ($P_1$, $P_2$) réalisées dans une moitié arbitraire desdits éléments secondaires ($U_{11}$, $U_{12}$, $U_{13}$, $U_{14}$) de ladite zone élémentaire (U), chaque microcuvette de ladite pluralité de microcuvettes ($P_1$, $P_2$) ayant une profondeur égale à au moins l'une de n profondeurs, n étant un entier égal ou supérieur à deux, dans lequel chaque bit desdites informations enregistrées sous la forme d'une microcuvette (P) a une profondeur qui correspond respectivement à l'une desdites n profondeurs, chaque bit desdites informations étant enregistré en établissant une profondeur d'une microcuvette correspondante (P), ledit dispositif de reproduction d'informations comprenant :

des moyens (10) pour émettre sur une rangée desdites zones élémentaires un faisceau lumineux de lecture (12) ayant des composantes de fréquence de n longueurs d'onde correspondant à quatre fois chacune desdites n profondeurs ; et

des moyens pour acquérir des informations de microcuvettes sur la base de la répartition d'intensité dans un plan perpendiculaire à un axe optique d'un faisceau lumineux réfléchi dudit faisceau lumineux de lecture à partir de ladite rangée de zones élémentaires, lesdits moyens pour acquérir des infonnations de microcuvettes comprenant un photodétecteur ($D_{21}$) du type à quatre secteurs ayant quatre parties divisées ($d_1$, $d_2$, $d_3$, $d_4$) et produisant quatre signaux de sortie lorsqu'il reçoit ledit faisceau lumineux réfléchi, quatre sommateurs ($add_1$, $add_2$, $add_3$, $add_4$) additionnant respectivement deux desdits quatre signaux de sortie dudit photodétecteur du type à quatre secteurs et produisant respectivement un signal sommateur ($S_1$, $S_2$, $S_3$, $S_4$) et un circuit logique ($CP_3$) produisant quatre signaux logiques ($S_a$, $S_b$, $S_c$, $S_d$) correspondant chacun audit signal sommateur produit par chacun desdits quatre sommateurs, ledit signal logique prenant un premier niveau logique lorsque le niveau dudit signal sommateur correspondant est supérieur aux niveaux des autres signaux sommateurs.

FIG. 1

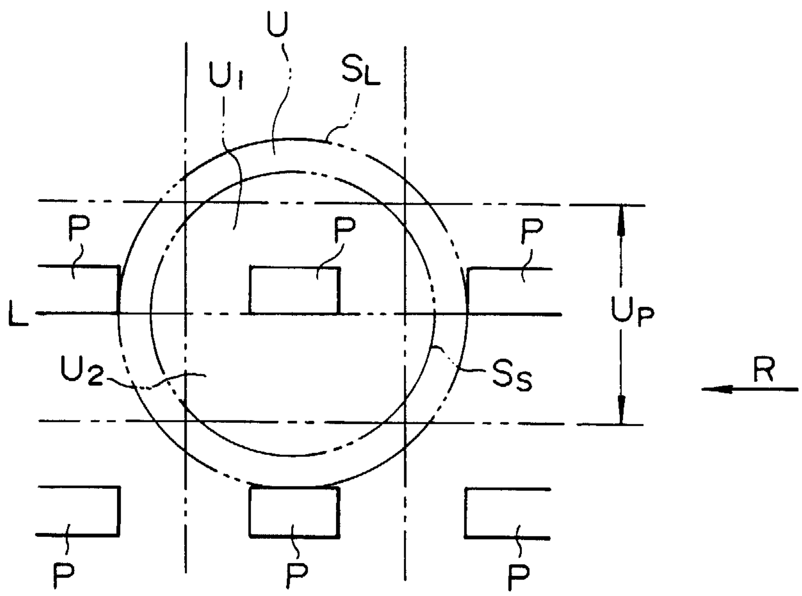

FIG. 2A

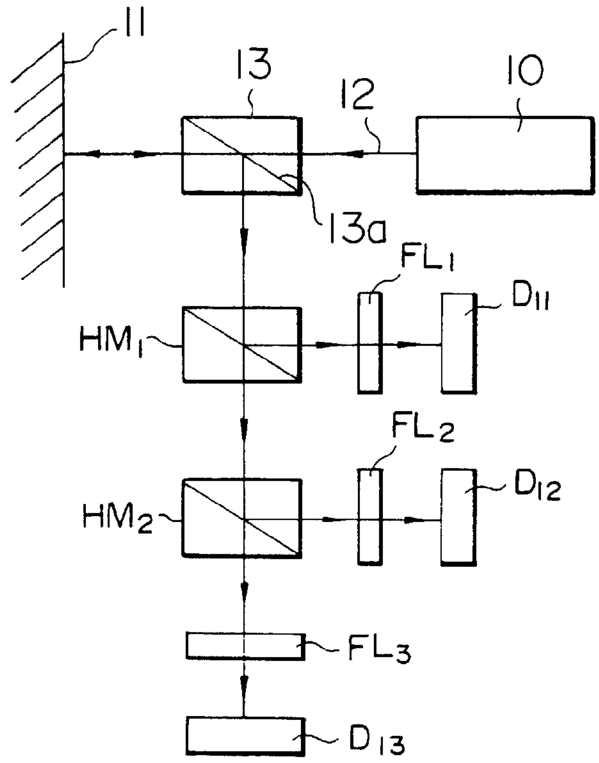
11
13
12
10
13a
FL1
D11
HM1
FL2
D12
HM2
FL3
D13

FIG. 2B

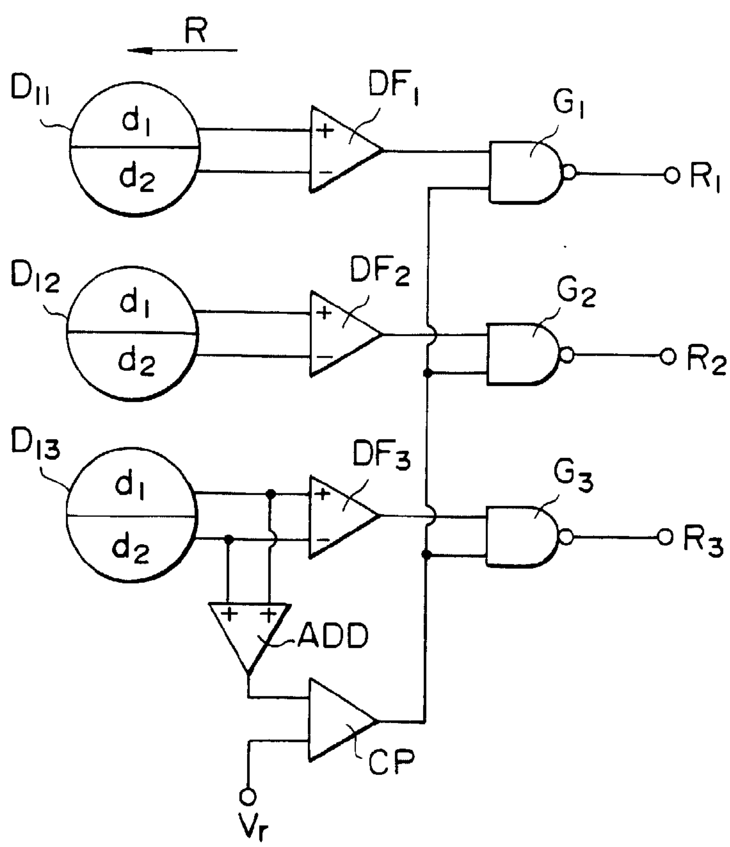
R
D11
d1
d2
DF1
G1
R1
D12
DF2
G2
R2
D13
DF3
G3
R3
ADD
CP
Vr

FIG. 3

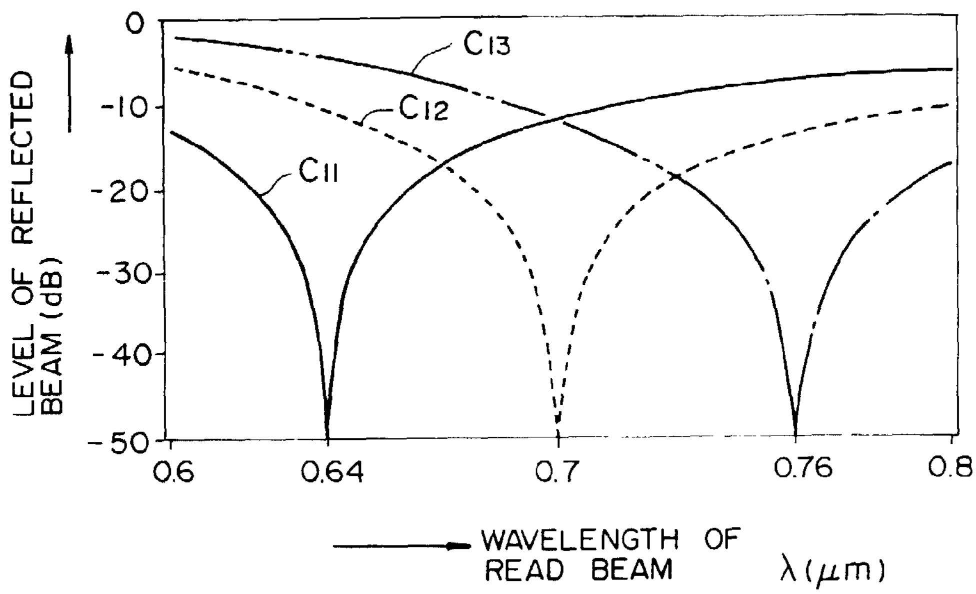
LEVEL OF REFLECTED BEAM (dB)
0
-10
-20
-30
-40
-50
C13
C12
C11
0.6
0.64
0.7
0.76
0.8
WAVELENGTH OF READ BEAM
λ (μm)

FIG. 4

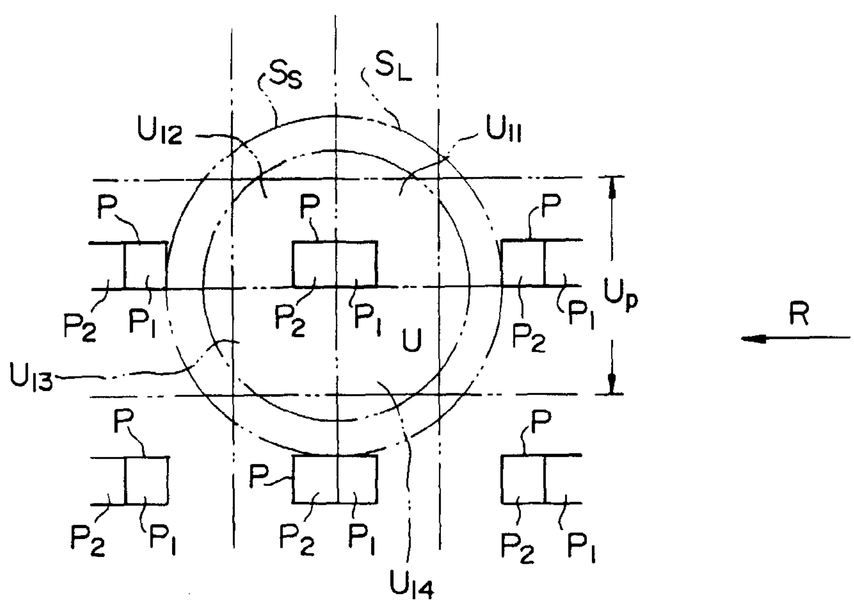
SS
SL
U12
U11
P
P2
P1
U
Up
R
U13
U14

FIG. 5A

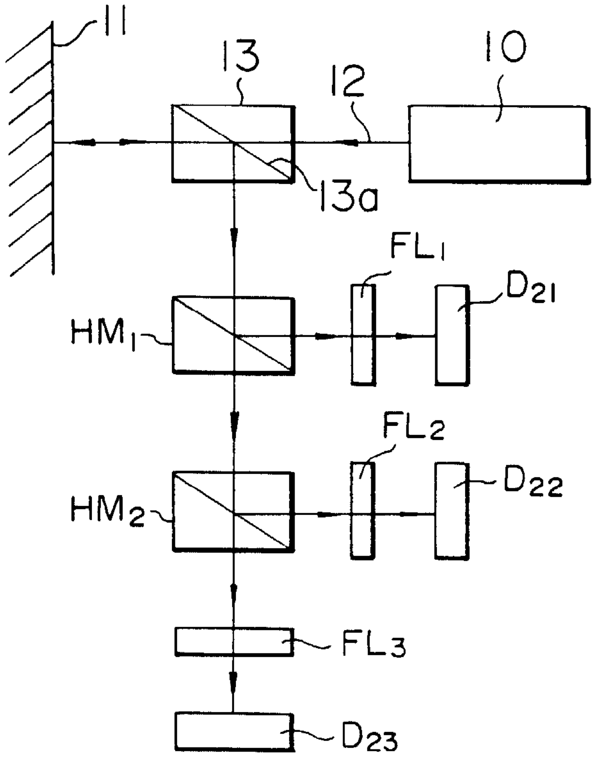
11
13
12
10
13a
FL1
D21
HM1
FL2
D22
HM2
FL3
D23

FIG. 5B

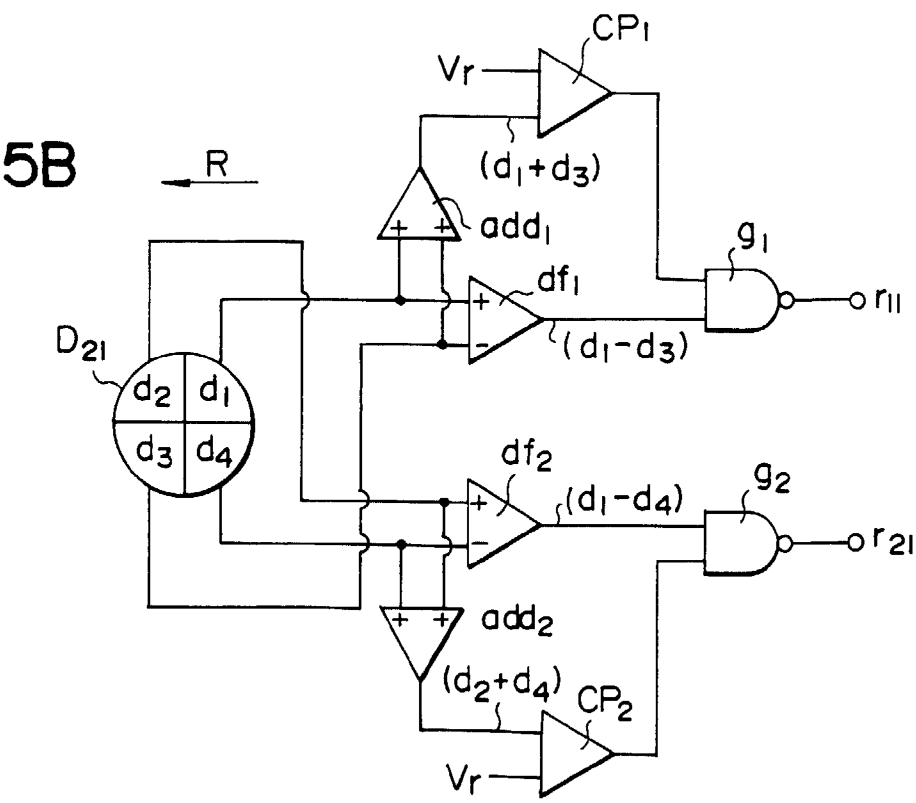
R
Vr
CP1
(d1+d3)
add1
g1
df1
r11
(d1-d3)
D21
d2
d1
d3
d4
df2
(d1-d4)
g2
r21
add2
(d2+d4)
CP2
Vr

FIG. 6(a)

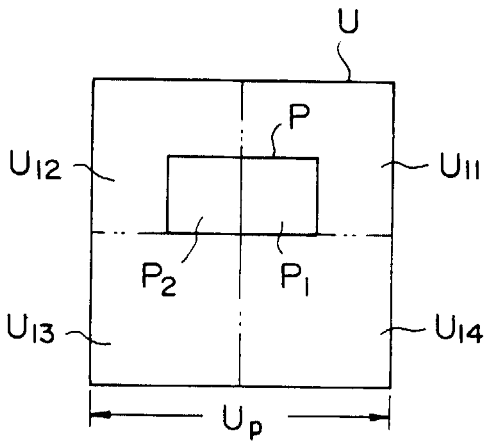


FIG. 6(b)

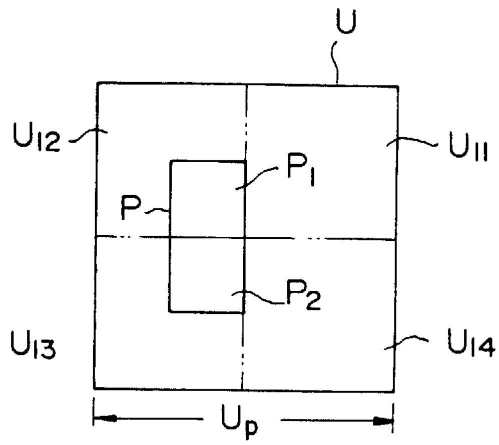


FIG. 6(c)

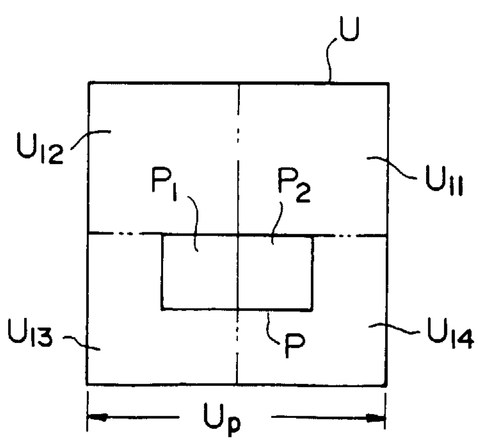


FIG. 6(d)

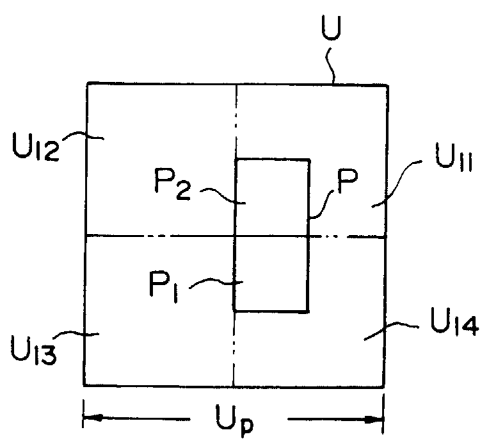

FIG.7(a)

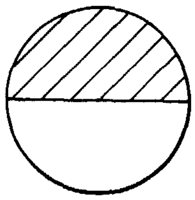

FIG.7(b)

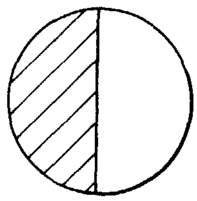

FIG.7(c)

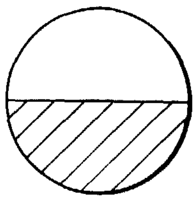

FIG.7(d)

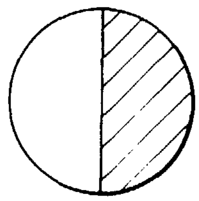

FIG.8

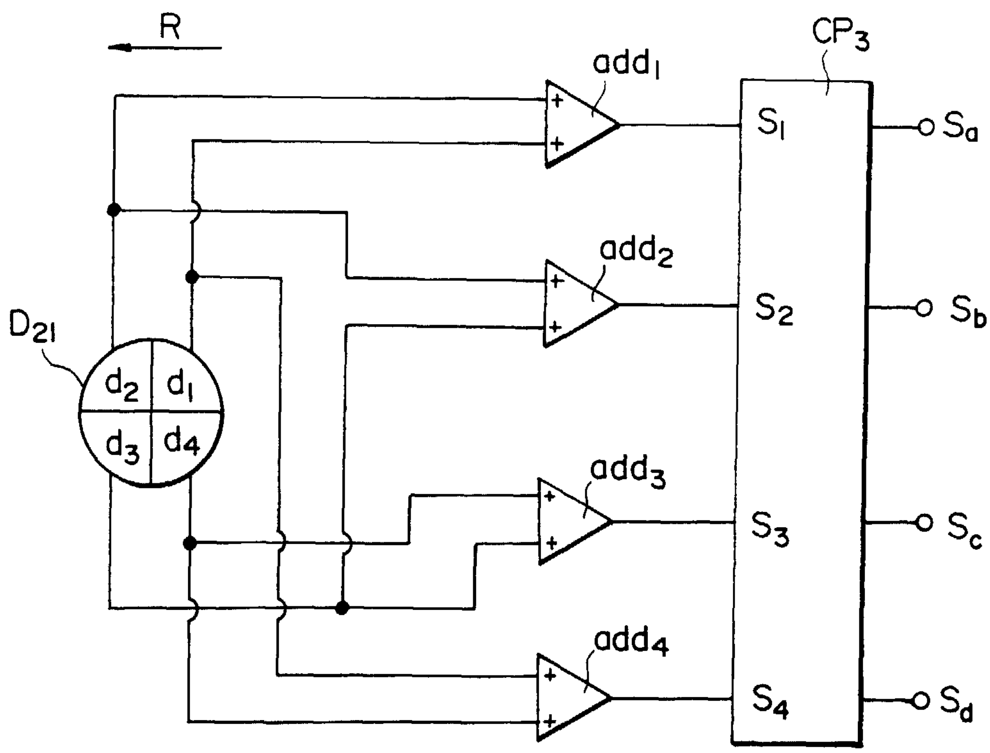

FIG. 9

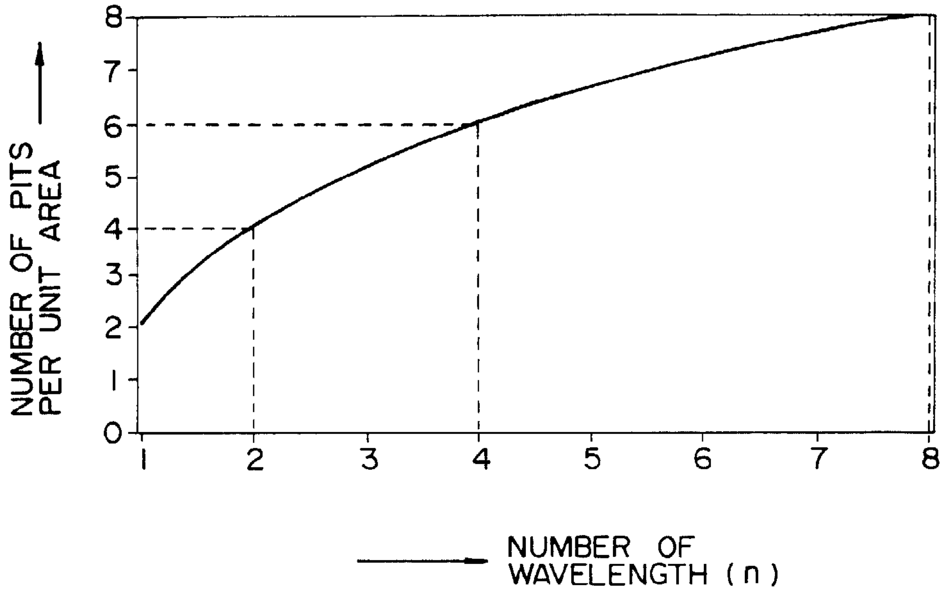
NUMBER OF PITS PER UNIT AREA
0
1
2
3
4
5
6
7
8
1
2
3
4
5
6
7
8
NUMBER OF WAVELENGTH (n)

FIG. 10

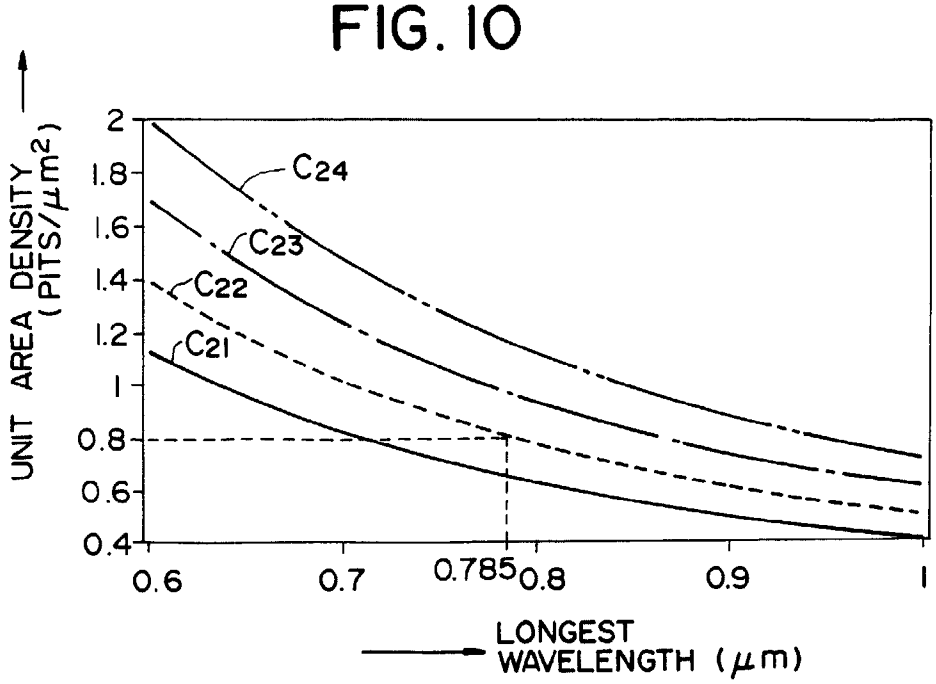
UNIT AREA DENSITY (PITS/μm2)
0.4
0.6
0.8
1
1.2
1.4
1.6
1.8
2
C24
C23
C22
C21
0.6
0.7
0.785
0.8
0.9
1
LONGEST WAVELENGTH (μm)